Europäisches Patentamt

(19) European Patent Office

Office européen des brevets

(11) Publication number: **0 297 497 B1**

(12) **EUROPEAN PATENT SPECIFICATION**

(45) Date of publication of patent specification :
05.06.91 Bulletin 91/23

(51) Int. Cl.⁵ : **F16B 19/10**

(21) Application number : **88110261.0**

(22) Date of filing : **28.06.88**

(54) **Blind fastener.**

(30) Priority : **01.07.87 US 68308**

(43) Date of publication of application :
**04.01.89 Bulletin 89/01**

(45) Publication of the grant of the patent :
**05.06.91 Bulletin 91/23**

(84) Designated Contracting States :
**AT BE CH DE ES FR GB GR IT LI LU NL SE**

(56) References cited :
**EP-A- 0 158 304**
**EP-A- 0 206 243**
**AT-B- 78 517**

(56) References cited :
**AT-B- 90 699**
**DE-U- 7 002 382**
**FR-A- 2 539 548**
**US-A- 2 827 097**

(73) Proprietor : **The B.F. Goodrich Company**
**3925 Embassy Parkway**
**Akron Ohio 44313 (US)**

(72) Inventor : **Phillips, Ronald Wayne, II**
**585 Manning Road**
**Mogadore Ohio 44260 (US)**

(74) Representative : **von Kreisler, Alek,**
**Dipl.-Chem. et al**
**Deichmannhaus am Hauptbahnhof**
**W-5000 Köln 1 (DE)**

EP 0 297 497 B1

## Description

This invention relates to fasteners and more particularly to thread locking type blind fasteners that can be installed entirely from one side of a structure wherein provision is made to suitably anchor such fastener during normal installation to permit torquing of the fastener without encountering any spin of the fastener. Such blind fasteners are used where it is not practical or possible to drill and tap the structure or where the other side of the structure is non-accessible.

Various designs of blind fasteners consisting of threaded tubular bodies which can be inserted through a hole in a structure and expanded to bear against the back or blind side of the structure such that the threaded portion will function as a stationary nut for fastening the desired external component. The upsetting process which expands that portion of the fastener against the back surface of the structure must be secure enough and complete to prevent future rotation of the fastener itself when rotating the screw or bolt, which may be repeated several times. Problems of rotations of the fastener occur where severe torquing of the screw is made.

A blind fastener connection containing the features of the precharacterizing part of claim 1 is known from EP-A-0 206 243. The blind fastener of this blind fastener connection has a head and a tubular body portion with a threaded bore therethrough. The head has a lateral extension and rests against a plate structure. The lateral extension of the head is secured to the plate structure by a rivet extending through auxiliary bores provided in the extension of the head and in the plate structure. The rivet having an axis which is parallel but laterally off-set from the axis of the threaded bore is a means for preventing rotation of the blind fastener during torquing a bolt into and out of the threaded bore. This known blind fastener connection has the drawback that an auxiliary bore for the rivet is necessary in the plate structure and that a rather complicate process for mounting the rivet is required.

US-A-2 827 097 discloses a floating nut connection for securing two plates to each other. This connection comprises a nut which is placed in a retainer or a cage member. The retainer is secured to a splined body element which has a knurled end for being frictionally inserted into a hole provided in one of the plates. A bolt is inserted through a hole in the other plate element and is screwed into the threaded portion of the nut. The shaft of the bolt extends through a clearance hole provided in the splined body element. The axis of this clearance hole is off-set with respect to the axis of the threaded bore of the nut. Further, the axis of the threaded bore of the nut is off-set from the central axis of the nut body. This floating nut connection requires four components in total and is rather complicated.

FR-A-2 539 548 describes an assembly for housing combustible rods within tubes. Each of said tube has on its end a stopper which is fixed to a socket by a bolt extending through a hole of said socket and screwed into a threaded bore of the stopper. For retaining the stopper against rotation with respect to the socket, the stopper has an axial extension extending into a recess of the socket. The axes of the socket and of the recess are laterally off-set with respect to the axes of the bolt. The stopper and the means for preventing rotation are located on the side of the circuit which is not accessible during tightening of the bolt.

It is the object of the present invention to provide a blind fastener connection of the type as defined in the precharacterizing part of claim 1 which is readily to be installed without requiring any preliminary preparation.

This object is solved, according to the invention, with the features of claim 1.

The invention relates further to a method of securing a fastener to a structural member, according to claim 8.

The present invention contemplates the countersinking of the surface to receive the fastener into a shallow flat circular shape however having the axis of the bore that receives the longitudinally extending body of the fastener off-set from the central axis of the countersunk circular bore thus permitting considerable torquing of the fastener body quickly and conveniently without requiring any preliminary preparation. Such fastener is simple in construction and inexpensive, providing for maximum strength against rotation, pulling out of the hole, or against slippage if there were insufficient bearing surface.

The blind fastener has an upper flat circular flange and a hollow threaded tubular body portion whose axis is off-set relative to the central axis of the flat circular flange. The axis of the circular flange is parallel to the axis of the threaded bore in such tubular body. The flange of the tubular body is received by a shallow bore of a structure such as a plate with the flange seated against the structure. The off-set tubular body is received by a second bore that is off-set from the shallow bore in the plate structure. A draw rod is threaded into the threaded bore of the tubular body and tensioned to upset the tubular body thereby expanding the body as it is drawn toward the structure to effectively capture the blind fastener to the structure which has the flat circular head bearing fully seated and held in the flat shallow bore in the plate structure.

In the accompanying drawings,

Fig. 1 is a perspective side elevational view of a blind fastener ;

Fig. 2 is a plan view of the blind fastener seated in a bore of a plate structure ;

Fig. 3 is a side elevational view of the blind fastener in cross section taken on line 3-3 of Fig, 2 illustrating the fastener in an installed condition ;

Fig. 4 is a side elevational view of the blind fastener installed with a portion thereof in cross section illustrating the fastener in an installed condition holding a fixed plate with a bolt ;

Fig. 5A is a side elevational view of a structural plate member and a router in preparation for preforming a flat circular bore therein ;

Fig. 5B is a side elevational view of the structural plate member with a flat circular bore therein ;

Fig. 5C is a side elevational view of the structural plate member with a flat circular bore therein and with a fixture positioned above such circular bore having an off-set guide bushing for guiding a drill to drill an off-set opening relative to the circular bore through such plate member ;

Fig. 5D is a side elevational view of the plate member with a flat circular bore therein receiving the fixture with the off-set guide bushing and the off-set guide bushing directing a drill to drill an off-set opening through such flat circular bore in the plate member ;

Fig. 5E is a side elevational view of the plate member with a flat circular bore and an off-set opening with a blind fastener positioned for installation into such bore and opening ;

Fig. 5F is a side elevational view of the plate member with its bore and off-set opening receiving the fastener with its off-set tubular body portion ;

Fig. 5G is a side elevational view of the plate member with its bore and off-set opening receiving the fastener with its off-set tubular body portion and an upsetting tool shown upsetting the blind fastener ;

Fig. 6 is a perspective side elevational view of a modified form of the blind fastener ;

Fig. 7 is a plan view of the modified blind fastener of Fig. 6 seated in the bore of a plate structure ;

Fig. 8 is a side elevational view of the blind fastener of Fig. 6 in cross section taken on line 8-8 of Fig. 7 illustrating the fastener in an installed condition ;

Fig. 9 is a side elevational view of the blind fastener installed with the fastener shown in full holding a fixed plate with a bolt on a plate structure ;

Fig. 10A is a side elevational view of a structural plate member with a drill positioned above such plate member in preparation for forming a tapered bore in such plate member ;

Fig. 10B is a side elevational view of the structural member with a tapered bore therein ;

Fig. 10C is a side elevational view of the structural plate member with a tapered bore therein and a fixture positioned thereabove having an off-set guide bushing for guiding a drill to drill an off-set opening through such plate member ;

Fig. 10D is a side elevational view of the plate member with its tapered bore receiving the fixture with its off-set guide bushing directing a drill to drill an off-set opening through such tapered bore ;

Fig. 10E is a side elevational view of the plate member with its tapered bore and an off-set opening with the modified form of blind fastener positioned for installation into such bore and opening;

Fig. 10F is a side elevational view of the plate member with is bore and off-set opening receiving the modified fastener of Fig. 6 ;

Fig. 10G is a side elevational view of the plate member with its bore and off-set opening receiving the modified fastener with its tubular body portion and an upsetting tool shown upsetting the blind fastener.

## DETAILED DESCRIPTION

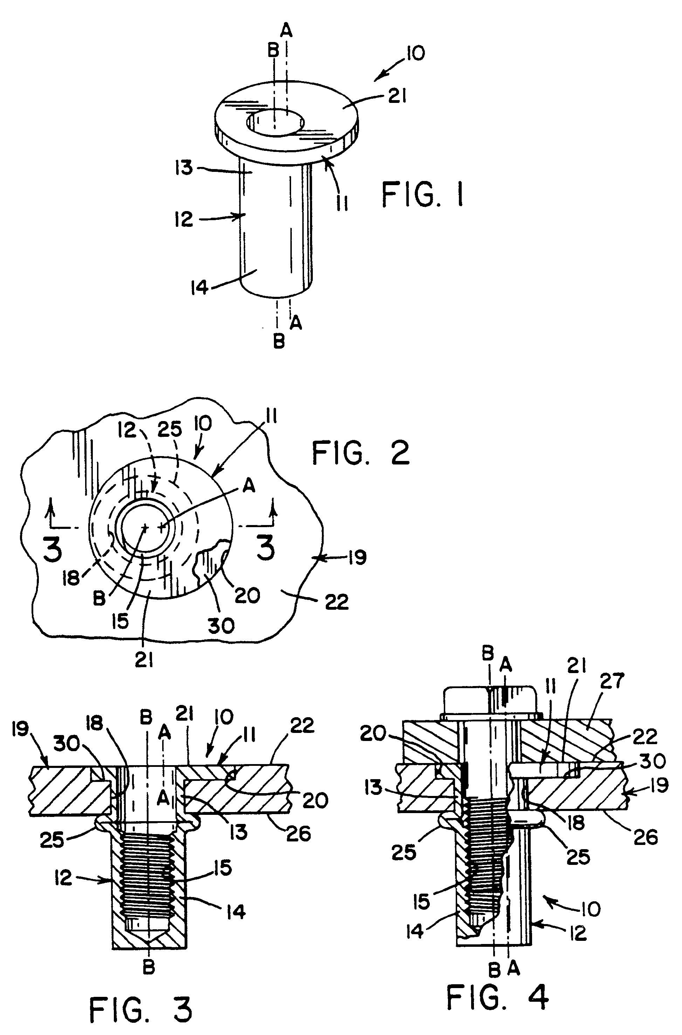

Referring to the drawings wherein like reference numerals refer to like elements in the several views, there is shown in Fig. 1 a blind fastener 10 having a flat circular flange 11 and a hollow tubular body 12 depending therefrom. The tubular body 12 of fastener 10 is a longitudinal extending shank or hollow cylindrical body having a reduced thin walled portion 13 adjacent the flange 11 and a thick walled portion 14 below such thin walled portion 13 to facilitate the upsetting action. The thin and thick walled portions of the hollow tubular body can be described as having a bore with a stepped diameter, with the largest bore diameter at the end adjacent the flange 11 and the smallest diameter at the lower bottom end portion of thick walled portion 14 which is tapped to produce threads 15 for the reception of a draw rod to facilitate the upsetting of such thin walled portion 13. Longitudinal slits may be provided in the upper body portion of the fastener as defined by the thinner walled portion 13 to facilitate the upsetting of the cylindrical body portion of the fastener. The bore of the tubular body 12 may extend completely through such body 12.

The central axis of the flat circular flange 11 is designated A-A in Fig. 1 whereas the vertical axis B-B of the central bore of the hollow tubular body is off-set relative to such axis A-A but parallel thereto.

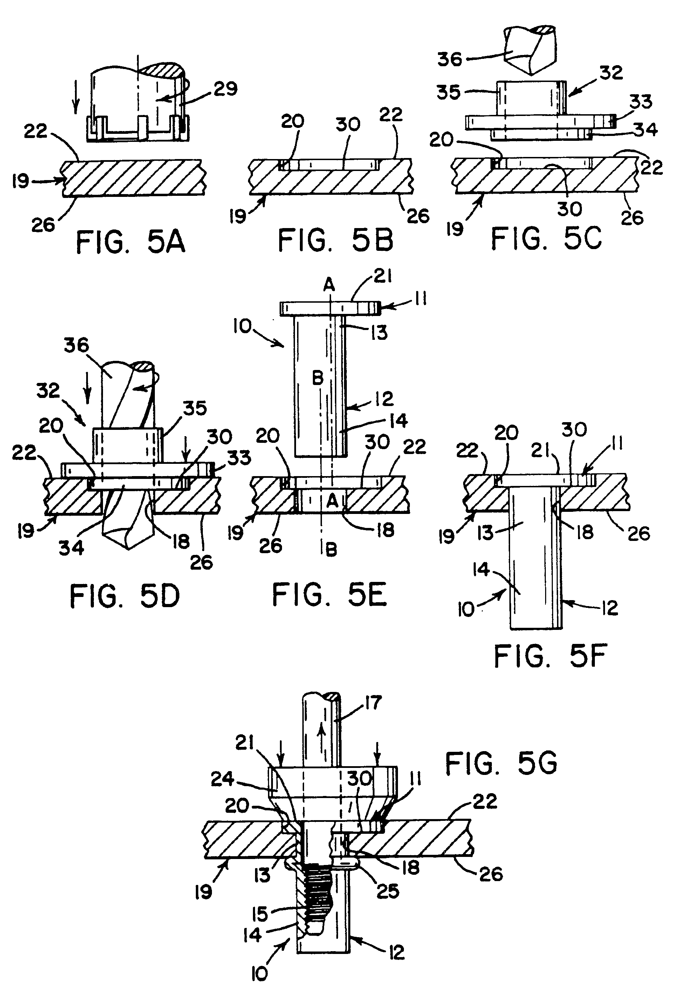

The fastener 10 is installed by screwing it onto the tip of a high strength threaded draw rod 17 and is inserted through a hole 18 in a structural plate member 19 which has a shallow bore 20 to receive the flat circular flange 11 whose top surface 21 is flush with the top surface 22 of the structural plate member 19. A non-rotatable anvil 24 (Fig. 5G) is inserted over the draw rod 17 and bears against the flange 11 of fastener 10 as an upward tension is applied to the draw rod 17. The longitudinal pressure and force in the direction of the flange will cause the tubular body 12 adjacent to flange 11 to be upset or buckle until such buckled portion designated 25 (Fig. 3) is applied firmly against the blind surface 26 of the structure through which it is installed.

The blind fastener 10 is now ready for receiving a screw or bolt to secure an external component such as plate 27 to the structural plate member 19 which can be firmly secured and torqued.

The method for effecting this installation of such non-rotatable blind fastener 10 is shown in Figs. 5A through 5G wherein the plate member 19 is first recessed as by a router 29 to provide a shallow bore 20 having a flat recessed surface 30. A drill fixture 32 with a central bearing flange 33 and a lower circular flange 34 is positioned onto plate member 19 such that circular flange 34 is received by bore 20. Drill fixture 32 has a drill guide bushing 35 integral with flanges 33 and 34 and an axis that is coincident with the axis B-B of the fastener 10 while the axis of the flange 34 is coincident with the axis A-A of the fastener and off-set relative to axis B-B. A rotary drill bit 36 then is guided by guide bushing 35 and a hole or opening 18 is drilled into the structural plate member 19. Fastener 10 is then positioned into plate member 19 with the top surface of the flange 11 even with the top surface of the plate member 19 and such flange 11 fully seated in the bore 20 and the tubular body 12 received by the bore or opening 18 in such plate member 19. The draw rod 17 is inserted into the central bore of the tubular member 12 of fastener 10 and threaded onto threads 15 in such bore or threaded onto threads 15 prior to insertion into the such plate member. With the fastener 10 fully seated in the bore of the plate member, non-rotatable anvil 24 bears against the flange 11 as upward tension and movement is applied on the draw rod 17 until the thin walled portion 13 of the tubular body 12 is caused to buckle as at 25 in Fig. 5G to firmly secure the fastener onto plate member 19.

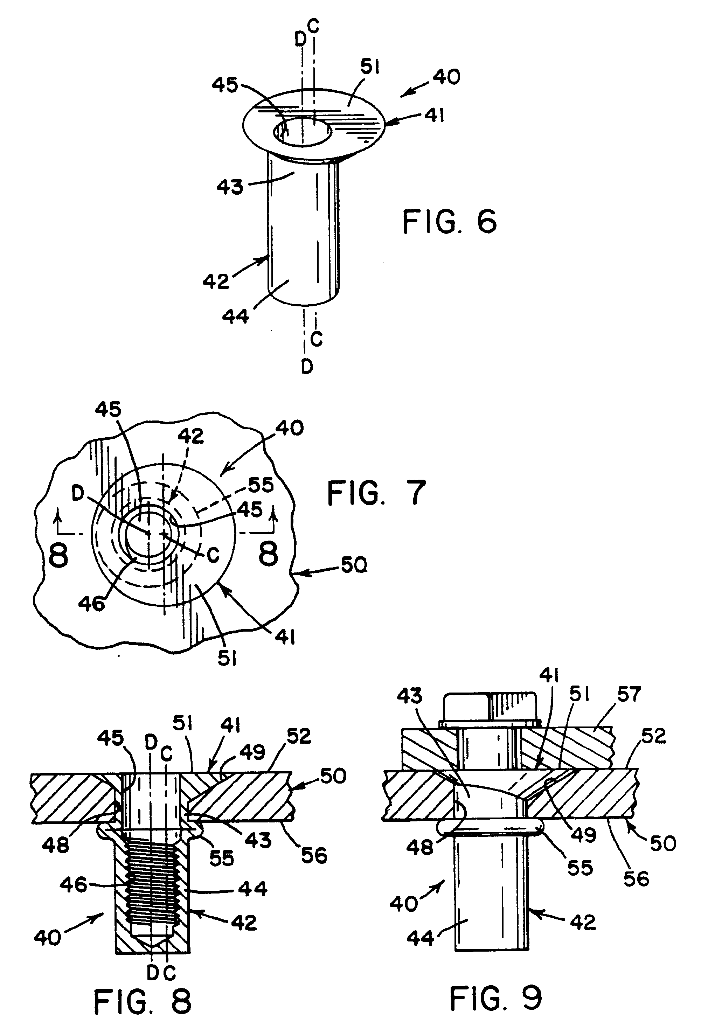

A modification of the blind fastener 10 is shown in Figs. 6 through 9 wherein blind fastener 40 has a circular flange 41 and a hollow tubular body 42 depending therefrom. The flange 41 is flat and circular on the very top but tapers towards the tubular body 42. As in the first described embodiment, tubular body 42 has a longitudinally extending shank or hollow cylindrical body having a reduced thin walled portion 43 adjacent the flange 41 and a thick walled portion 44 below such thin walled portion 43 to facilitate the upsetting action. Such thin and thick walled portions of the hollow tubular body 42 defines a bore 45 whose lower portion (thick walled portion 44) is threaded as at 46 for the reception of a draw rod to facilitate the upsetting of the thin walled portion 43 and also to facilitate the reception of a threaded bolt for securing a plate member to structural member. Longitudinal slits may be provided in the upper body portion of the fastener as defined by the thinner walled portion 43 to facilitate the upsetting of the cylindrical body portion of the fastener. The bore of the tubular body 42 may extend completely through such body 42.

The central axis of the tapering flange 41 is designated C-C in Fig. 6 whereas the vertical axis D-D of the central bore of the hollow tubular body is off-set relative to such axis C-C but parallel thereto.

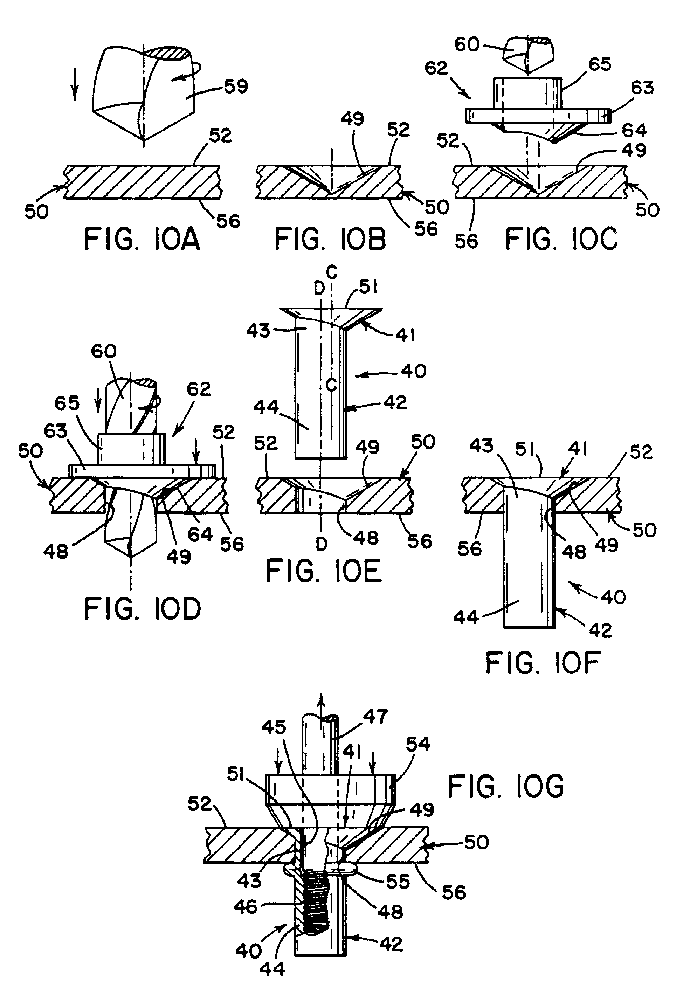

The fastener 40 is installed by screwing it onto the tip of a high strength threaded draw rod 47 and is inserted through a hole 48 have a tapered upper bore portion 49 in a structural plate member 50. The tapered flange 41 is snugly received by the upper tapered bore portion 49 of hole 48 and has its top surface 51 is flush with the top surface 52 of the structural plate member 50 (Fig. 10F). A non-rotatable anvil 54 (Fig. 10G) is inserted over the draw rod 47 and bears against the flange 41 of fastener 40 as an upward tension is applied to the draw rod 47. The longitudinal pressure and force in the direction of the flange will cause the tubular body 42 adjacent to flange 41 to be upset or buckle until such buckled portion designated 55 (Fig. 8) is applied firmly against the blind surface 56 of the structure through which it is installed.

The blind fastener 40 is now ready for receiving a screw or bolt to secure an external component such as plate 57 to the structural plate member 50 which can be firmly secured and torqued.

The method for effecting this installation of such non-rotatable blind fastener 40 is shown in Figs. 10A through 10G wherein the plate member 50 is first recessed as by a drill bit 59 to provide a tapered hole 49 having tapering side surfaces. A drill fixture 62 with a central bearing flange 63 and a tapering end 64 is positioned onto plate member 50 such that tapering end 64 is received by the tapering hole 49. Drill fixture 62 has a guide bushing 65 integral with flange 63 and tapering end 64 and a axis that is coincident with the axis D-D of the fastener 40 while the axis of the flange 63 is coincident with the axis C-C of the fastener and off-set relative to axis D-D. The rotary drill bit 60 then is guided by bushing 65 and the hole or opening 48 is drilled into the structural plate member 50. Fastener 40 is then positioned into plate member 50 with the top surface 51 of the tapering flange 41 even with the top surface 52 of the plate member 50 and such flange 41 fully seated in the tapered bore 49 and the tubular body 42 received by the bore or opening 48 in such plate member 50. The draw rod 47 is inserted into the central bore of the tubular member 42 of fastener 40 and threaded onto threads 46 in such bore of threaded onto threads 46 prior to insertion into the such plate member. With the fastener 40 fully seated in the bores of the plate member 50, non-rotatable anvil 54 bears against the flange 41 as upward tension and movement is applied on the draw rod 47 until the thin walled portion 43 of the tubular body 42 is caused to buckle as at 55 in Fig. 8 to firmly secure the fastener onto plate member 50.

## Claims

1. A blind fastener connection comprising a blind fastener (10) having a head (11) and a cylindrical body (12), said cylindrical body being integral with said head, said cylindrical body passing through a hole (18) in a structure (19) and being upset for engagement with the blind surface (26) of the structure by tension on a draw rod (17) insertable and removable through said head, said cylindrical body (12) having a hollow threaded bore (15) extending longitudinally therein, said head (11) having a flat upper surface (21) and being shaped for engaging a means for securing the head against rotation provided on said structure, **characterized in that** said head (11) is circular and has a central axis (A) which is parallel to but off-set from the axis (B) of said hollow threaded bore (15), and that said means for securing the head against rotation is a circular recess (20) of the structure, said recess receiving said head.

2. A blind fastener as set forth in claim 1 wherein said upper portion (13) of said cylindrical body (12) being a thinner wall cross section than the adjacent lower portion (14) to facilitate the buckling of said upper portion.

3. A blind fastener as set forth in claim 1 or 2 wherein said head (11) is a thin flanged circular head.

4. A blind fastener as set forth in claim 3 wherein said flanged circular head (11) is of constant thickness throughout.

5. A blind fastener as set forth in one of claims 2-4 wherein the wall thickness of said threaded portion (15) is greater than that of said upper portion.

6. A blind fastener as set forth in claim 1 or 2 wherein said circular head (41) tapers from said flat upper surface (51) toward said central axis (C).

7. A blind fastener as set forth in claim 6 wherein said taper of said head presents a larger mass on one side of said axis (D) of said hollow threaded bore (46) than the other side of axis of said threaded bore (Fig. 9).

8. The method of securing a fastener (10) to a structural member (19) having a wall of predetermined thickness comprising the steps of making a circular recess (20) on one side into said structural member (19) with said recess having a central axis (A), drilling a hole (18) through said structural member having one end opening into said recess (20) and with the axis (B) of said drilled hole being off-set laterally from said central axis (A), locating a fastener (10) with a flange (11) and a depending tubular member (12) into said recess (20) so that said flange (11) is snugly received by said recess and said depending tubular member (12) is snugly received by said hole (18) with the axis (A) of said flange off-set from said axis (B) of said drilled hole, and upsetting said tubular member (12) of said fastener to buckle a portion (25) of said fastener (10) against the other side of the structural member (19).

9. The method of claim 8 wherein said recess (20) is routed to provide a flat shallow circular recess.

10. The method of claim 8 wherein said recess (49) is tapered and the lower portion of said flange (41) is tapered to mate with said tapered recess.

11. The method of claim 10 wherein said recess (49) is drilled to provide said tapered recess.

12. The method of one of claims 8-11 wherein said recess (20 ; 49) is configured to provide the top surface (21 ; 51) of said fastener to be flush with the top surface (22 ; 52) of said structural member.

## Ansprüche

1. Blindbefestigungsverbindung mit einem Blindbefestigungselement (10) mit einem Kopf (11) und einem zylindrischen Körper (12), wobei der zylindrische Körper einstückig an dem Kopf angeformt ist und sich durch ein Loch (18) in einer Struktur (19) erstreckt und zum Angriff an der Blindfläche (26) der Struktur durch Spannen auf eine durch den Kopf hindurch einführbare und entfernbare Zugstange (17) gestaucht ist, wobei der zylindrische Körper (12) eine sich längs durch diesen erstreckende hohle Gewindebohrung (15) aufweist, wobei der Kopf (11) eine ebene Oberseite (21) aufweist und zum Eingriff mit einer an der Struktur vorgesehenen Einrichtung zum Sichern des Kopfes gegen Drehung ausgebildet ist, dadurch gekennzeichnet, daß der Kopf (11) rund ist und eine Mittelachse (A) aufweist, die parallel, jedoch versetzt zur Achse (B) der hohlen Gewindebohrung (15) ist, und daß die Einrichtung zum Sichern des Kopfes gegen Drehung eine runde Ausnehmung (20) der Struktur (19) ist, die den Kopf aufnimmt.

2. Blindbefestigungselement nach Anspruch 1, bei dem der obere Abschnitt (13) des zylindrischen Körpers (12) einen dünneren Wandquerschnitt aufweist als der benachbarte untere Abschnitt (14), um das Knicken des oberen Abschnitts zu erleichtern.

3. Blindbefestigungselement nach Anspruch 1 oder 2, bei dem der Kopf (11) ein dünner, mit einem Flansch versehener, runder Kopf ist.

4. Blindbefestigungselement nach Anspruch 3, bei dem der mit einem Flansch versehene runde Kopf (11) durchgehend eine konstante Dicke aufweist.

5. Blindbefestigungselement nach einem der Ansprüche 2-4, bei dem die Wandstärke des Gewindeabschnittes (15) größer ist als diejenige des oberen Abschnitts.

6. Blindbefestigungselement nach Anspruch 1 oder 2, bei dem der runde Kopf (41) sich von der ebenen Oberseite (51) zur Mittelachse (C) hin verjüngt.

7. Blindbefestigungselement nach Anspruch 6, bei dem der Kegel des Kopfes auf einer Seite der Achse (D) der hohlen Gewindebohrung (46) eine größere Masse als auf der anderen Seite der Achse der Gewindebohrung aufweist (Fig. 9).

8. Verfahren zum Befestigen eines Befestigungselementes (10) an einem Strukturteil (19) mit einer Wand von vorbestimmter Dicke, mit den folgenden Schritten :
- Ausbilden einer runden Ausnehmung (20) auf einer Seite des Strukturteiles (19), wobei die Ausnehmung eine Mittelachse (A) aufweist,
- Bohren eines Loches (18) durch das Strukturteil, dessen eines Ende in die Ausnehmung (20) mündet und wobei die Achse (B) des gebohrten Loches bezüglich der Mittelachse (A) versetzt ist,
- Anordnen eines mit einem Flansch (11) versehenen und ein herabhängendes rohrförmiges Teil (12) aufweisenden Befestigungselementes (10) in der Ausnehmung (20), derart, daß der Flansch (11) passend in der Ausnehmung und das herabhängende Teil (12) passend in dem Loch (18) aufgenommen ist, wobei die Achse (A) des Flansches zu der Achse (B) des gebohrten Loches versetzt ist, und
- Stauchen des rohrförmigen Teiles (12) des Befestigungselements, um einen Teil (25) des Befestigungselements (10) gegen die andere Seite des Strukturteiles (19) zu knicken.

9. Verfahren nach Anspruch 8, bei dem die Ausnehmung (20) zur Bildung einer ebenen flachen runden Ausnehmung ausgefräst wird.

10. Verfahren nach Anspruch 8, bei dem die Ausnehmung (49) sich verjüngt und der untere beschnitt des Flansches (41) zum Zusammenpassen mit der sich verjüngenden Ausnehmung verjüngt ist.

11. Verfahren nach Anspruch 10, bei dem die Ausnehmung (49) zur Bildung der sich verjüngenden Ausnehmung gebohrt wird.

12. Verfahren nach einem der Ansprüche 8-11, bei dem die Ausnehmung (20 ; 49) derart ausgebildet ist, daß die Oberseite (21 ; 51) des Befestigungselements mit der Oberseite (22 ; 52) des Strukturteiles fluchtet.

**Revendications**

1. Liaison à dispositif de fixation en aveugle comprenant un dispositif de fixation en aveugle (10) ayant une tête (11) et un corps cylindrique (12), ledit corps cylindrique étant solidaire de ladite tête, ledit corps cylindrique traversant un trou (18) dans une structure (19) et étant refoulé pour le contact avec la surface en aveugle (26) de la structure par tension sur une tige d'étirage (17) susceptible d'être insérée et retirée au travers de ladite tête, ledit corps cylindrique (12) présentant un alésage fileté creux (15) s'étendant longitudinalement dans celui-ci, ladite tête (11) ayant une surface supérieure plate (21) et étant conformée pour venir au contact d'un moyen pour fixer la tête vis-à-vis de la rotation et qui est prévu sur ladite structure, caractérisée en ce que ladite tête (11) est circulaire et présente un axe central (A) qui est parallèle mais décalé de l'axe (B) de l'alésage fileté creux (15) et en ce que ledit moyen pour fixer la tête vis-à-vis de la rotation est un évidement circulaire (20) de la structure, ledit évidement recevant ladite tête.

2. Dispositif de fixation en aveugle selon la revendication 1, dans lequel ladite partie supérieure (13) dudit corps cylindrique (12) présente une section transversale de paroi plus mince que celle de la partie inférieure contigüe (14) pour faciliter l'écrasement de ladite partie supérieure.

3. Dispositif de fixation en aveugle selon l'une des revendications 1 ou 2, dans lequel ladite tête (11) est une mince tête circulaire à rebord.

4. Dispositif de fixation en aveugle selon la revendication 3, dans lequel ladite tête circulaire à rebord (11) est d'une épaisseur constante.

5. Dispositif de fixation en aveugle selon l'une quelconque des revendications 2 à 4, dans lequel l'épaisseur de paroi de ladite partie filetée (15) est supérieure à celle de ladite partie supérieure.

6. Dispositif de fixation en aveugle selon l'une des revendications 1 ou 2, dans lequel la tête circulaire (41) s'effile de ladite surface supérieure plate (51) vers ledit axe central (C).

7. Dispositif de fixation en aveugle selon la revendication 6, dans lequel l'effilement de ladite tête présente une plus grande masse sur un côté dudit axe (D) de l'alésage fileté creux (46) que sur l'autre côté de l'axe dudit alésage fileté (Fig. 9).

8. Procédé de fixation d'un dispositif de fixation (10) à un élément de structure (19) ayant une paroi d'épaisseur prédéterminée, comprenant les étapes consistant à prévoir un évidement circulaire (20) sur un côté dans ledit élément de structure (19) avec ledit évidement ayant un axe central (A), à perforer un trou (18) à travers ledit élément de structure ayant une extrémité débouchant dans ledit évidement (20), l'axe (B) dudit trou perforé étant décalé latéralement dudit axe central (A), à disposer un dispositif de fixation (10) avec un rebord (11) et un élément tubulaire attenant (12) dans ledit évidement (20), afin que ledit rebord (11) soit reçu confortablement par ledit évidement et que ledit élément tubulaire attenant (12) soit reçu confortablement par ledit trou (18), l'axe (A) dudit rebord étant décalé à partir dudit axe (B) dudit trou perforé, et à refouler ledit élément tubulaire (12) dudit dispositif de fixation pour écraser une partie (25) dudit dispositif de fixation (10) contre l'autre côté de l'élément de structure (19).

9. Procédé selon la revendication 8, dans lequel ledit évidement (20) est réalisé pour avoir un évidement circulaire peu profond plat.

10. Procédé selon la revendication 8, dans lequel ledit évidement (49) est effilé et la partie inférieure dudit rebord (41) est effilée pour s'adapter audit évidement effilé.

11. Procédé selon la revendication 10, dans lequel ledit évidement (49) est perforé pour avoir ledit évidement effilé.

12. Procédé selon l'une quelconque des revendications 8 à 11, dans lequel ledit évidement (20, 49) est réalisé pour avoir la surface supérieure (21, 51) dudit dispositif de fixation à niveau avec la surface supérieure (22, 52) dudit élément de structure.

FIG. 1

FIG. 2

FIG. 3

FIG. 4

8

FIG. 5A

FIG. 5B

FIG. 5C

FIG. 5D

FIG. 5E

FIG. 5F

FIG. 5G

FIG. 6

FIG. 7

FIG. 8

FIG. 9

FIG. IOA

FIG. IOB

FIG. IOC

FIG. IOD

FIG. IOE

FIG. IOF

FIG. IOG